# DEMANDE DE BREVET EUROPEEN

(11) **EP 0 657 332 A1**
(43) Date de publication de la demande: **14.06.1995**
(21) Numéro de dépôt: 94118629.8
(22) Date de dépôt: 26.11.1994
(51) Int. Cl.: B60S 1/38

(54) **Balai d'essuie-glace muni de pièces de connexion, notamment pour véhicule automobile**

(30) Priorité: 08.12.1993 FR 9314720
(71) Demandeur: VALEO SYSTEMES D'ESSUYAGE, 78180 Montigny-Le-Bretonneux (FR)
(72) Inventeur: Raymond, Guy, F-63320 Meilhaud (FR); Teindas, Jean-Louis, F-63190 Ravel (FR)
(74) Mandataire: Gamonal, Didier

(57) **Abrégé**

Un balai d'essuie-glace est généralement constitué d'un ensemble d'étriers (10,22) portant une lame d'essuie-glace (6) en étant articulés les uns aux autres par l'intermédiaire de pièces de connexion (26).

Selon l'invention, un étrier (10,22) porte une saillie non effaçable (48) venant coopérer avec une surface d'appui de verrouillage (60) prévue sur la pièce de connexion (26).

## Description

La présente invention se rapporte à un balai d'essuie-glace, notamment pour véhicule automobile.

Elle concerne plus particulièrement une pièce de connexion entre deux éléments articulés que comporte ce balai d'essuie-glace.

Habituellement, un balai d'essuie-glace est constitué d'une monture porteuse d'une lame d'essuie-glace apte à essuyer une surface vitrée d'une véhicule automobile telle qu'un pare-brise.

La monture porteuse est généralement constituée d'un étrier principal présentant une section en forme de "U" inversé avec un dos et des flancs latéraux.

Sur la base, au niveau de la région médiane de cet étrier, il est prévu une découpe en forme de fenêtre à l'intérieur de laquelle est logé un axe d'articulation permettant le raccordement du balai d'essuie-glace avec un bras d'essuie-glace par l'intermédiaire d'une pièce de raccordement.

Au moins l'une des extrémités de cet étrier principal porte, de manière articulée par l'intermédiaire d'une pièce de connexion, un autre étrier articulé dans sa région médiane par la pièce de connexion et dont les extrémités libres portent soit des griffes de liaison avec la lame d'essuie-glace, soit d'autres pièces de connexion pouvant également être raccordées à une autre série d'étriers, ces derniers étant pourvus à leur tour de griffes de liaison avec la lame d'essuie-glace.

Comme décrit dans la demande FR-A-2 491 847, la pièce de connexion présente une forme de "U" inversé avec une base et deux côtés latéraux apte à être logée dans le profil de l'étrier qui le porte, de telle sorte que la base de la pièce de connexion vienne coopérer avec le fond du dos de l'étrier et que les côtés latéraux de la pièce de connexion viennent s'appuyer sur les flancs latéraux de l'étrier.

De manière connue en soi, les côtés latéraux de la pièce de connexion présentent des pivots d'articulation pour le pivotement de l'autre étrier qui est disposé à l'intérieur du "U" que présente ladite pièce de connexion.

De plus, comme décrit dans ce document, la pièce de connexion présente des moyens de verrouillage par rapport à l'étrier qui le porte, ces moyens de verrouillage consistant en un pion perpendiculaire à la base de la pièce de connexion venant coopérer avec une ouverture prévue dans le dos de l'étrier, ce pion pouvant être clipé dans l'ouverture.

La Demanderesse a constaté que ce dispositif, bien que donnant satisfaction, présente néanmoins quelques inconvénients.

En effet, il est nécessaire, d'une part, de compliquer l'élaboration de la pièce de connexion en prévoyant, à partir de la base de cette pièce de connexion, un pion apte à venir coopérer avec une ouverture prévue sur le dos de l'étrier et, d'autre part, de nécessiter une grande précision de montage pour faire coopérer le pion de la pièce de connexion avec l'ouverture prévue dans le dos de l'étrier principal.

De plus, aucun moyen de fixation sûr n'est prévu entre la pièce de connexion et l'étrier qui le porte, ce qui autorise un éventuel désengagement de la pièce de connexion avec l'étrier par dégagement du pion hors de l'ouverture en entraînant un disfonctionnement du balai d'essuie-glace.

La Demanderesse se propose de remédier aux inconvénients mentionnés ci-dessus en présentant un balai comportant une pièce de connexion dont la fixation sur l'étrier qui le porte est assurée d'une manière simple et sûre sans entraîner de possibilité de démontage accidentel de la pièce de connexion.

A cet effet, selon l'invention, un balai d'essuie-glace, notamment pour véhicule automobile, comportant une monture porteuse d'une lame d'essuie-glace, ladite monture étant constituée d'une multiplicité d'étriers présentant une section en forme de "U" inversé avec un dos et deux flancs latéraux et articulés entre eux par l'intermédiaire de pièces de connexion présentant une forme de "U" inversé avec une base et des côtés latéraux et comportant des moyens de verrouillage par rapport à l'un des étriers, est caractérisé en ce que l'étrier porte une saillie non effaçable venant coopérer avec une surface d'appui de verrouillage prévue sur la pièce de connexion.

Grâce à l'invention, une fois que la pièce de connexion est montée à l'intérieur du "U", la coopération de la saillie avec l'évidement empêche tout déplacement de l'un par rapport à l'autre, ce qui assure une fixation sûre et certaine de la pièce de connexion dans l'étrier qui la porte.

Les autres caractéristiques et avantages vont ressortir maintenant à la lecture de la description qui va suivre en se référant aux dessins annexés sur lesquels :
- la figure 1 montre un balai d'essuie-glace selon l'invention ;
- la figure 2 est une coupe partielle selon la ligne 2-2 de la figure 1 ;
- la figure 3 est une vue à grande échelle d'une partie du balai d'essuie-glace avec une coupe locale ;
- la figure 4 est une vue en élévation correspondant sensiblement à la figure 3 ;
- les figures 5 à 7 montrent le procédé de montage permettant de réaliser l'invention ;
- la figure 8 montre une variante de réalisation de l'invention.

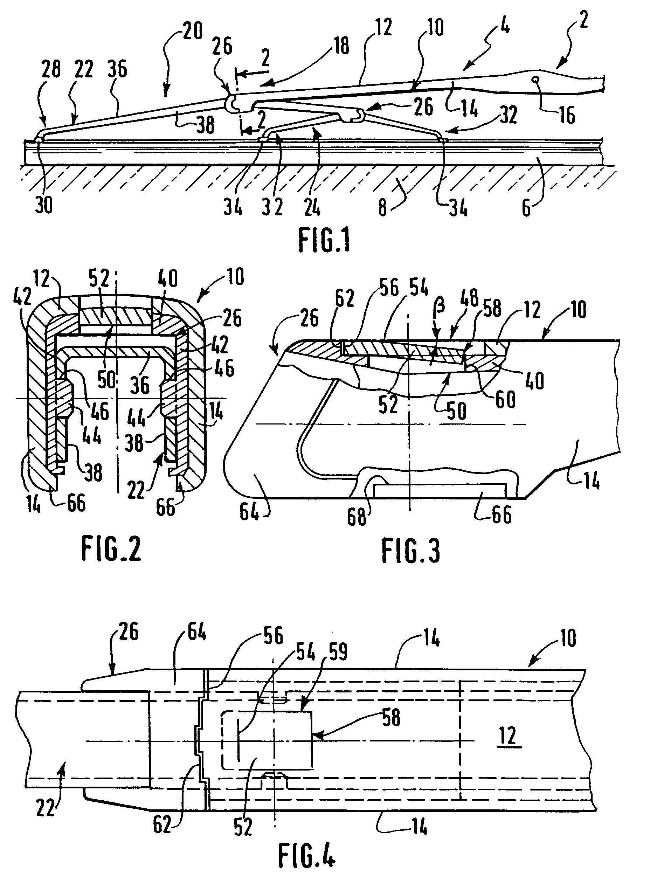

On se réfère maintenant aux figures 1 et 2 sur lesquelles un balai d'essuie-glace 2 est constitué d'une monture porteuse 4 d'une lame d'essuie-glace 6 apte à frotter sur une surface vitrée 8, telle qu'un pare-brise de véhicule automobile.

La monture porteuse est constituée, dans l'exemple représenté, d'un étrier principal 10 présentant en section une forme de "U" inversé avec un dos 12 et deux flancs latéraux 14 sensiblement perpendiculaires audit dos.

Au niveau de la partie médiane de cet étrier principal, est prévue une ouverture (non représentée) à l'intérieur de laquelle est logé un axe 16 entre les deux flancs latériaux 14 de manière à constituer un axe d'articulation avec un bras d'essuie-glace (non représenté).

L'extrémité libre 18 de cet étrier principal porte un système de palonnier 20 constitué d'un étrier intermédiaire 22 et d'un étrier terminal 24.

Comme montré à titre d'exemple sur la figure 1, l'étrier intermédiaire 22 présente une région médiane articulée sur l'étrier principal 20, par l'intermédiaire d'une pièce de connexion 26, une extrémité 28 munie de griffes 30 aptes à porter la lame d'essuie-glace 6 et une autre extrémité munie d'une autre pièce de connexion 26 qui est de plus petite dimension et sur laquelle est articulé l'étrier terminal 24 par sa région médiane et dont les extrémités 32 sont munies de griffes 34 aptes à porter la lame d'essuie-glace 6.

Comme visible sur cette figure, la lame d'essuie-glace est ainsi portée par une monture porteuse constituée d'un étrier principal, sur lequel est articulé un étrier intermédiaire, sur lequel est articulé à une extrémité un étrier terminal.

Il peut être envisagé, et cela sans sortir du cadre de l'invention, que soit chaque extrémité de l'étrier intermédiaire soit munie d'étriers terminaux, soit que chaque extrémité de l'étrier intermédiaire comporte des griffes venant porter la lame 6.

En se référant plus particulièrement maintenant à la figure 2, l'étrier intermédiaire 22 présente une section en "U" inversé avec un un dos 36 sensiblement parallèle au dos 12 de l'étrier principal et deux flancs latéraux 38 sensiblement parallèles aux flancs latéraux 14 de l'étrier principal, la section en "U" de l'étrier intermédiaire étant inférieure à la section en "U" de l'étrier principal.

En outre, la pièce de connexion 26 présente également une forme de "U" inversé avec une base 40 disposée entre le dos 12 de l'étrier principal et le dos 36 de l'étrier intermédiaire, et deux côtés latéraux 42 logés entre les flancs latéraux 14 de l'étrier principal et les flancs latéraux 38 de l'étrier intermédiaire.

La pièce de connexion présente des pivots 44 saillants à partir de la face interne des côtés 42 en étant diposés coaxialement, ces pivots étant aptes à coopérer avec des ouvertures 46 prévues dans les flancs latéraux 38 de l'étrier intermédiaire 22.

Comme visible sur la figure 2, la pièce de connexion 26 prend appui à l'intérieur du "U" que présente l'étrier principal par sa base 40 qui vient s'appuyer sur la face interne du dos 12 de l'étrier principal 10 et par ses côtés latéraux 42 qui viennent s'appuyer sur les faces internes des flancs latéraux 14 de ce même étrier.

La face externe des flancs latéraux 38 de l'étrier intermédiaire 22 s'appuie sur la face interne des côtés latéraux 42 de la pièce de connexion et les ouvertures 46 que présente cet étrier viennent coopérer avec les pivots 44 que porte la pièce de connexion.

Pour permettre l'articulation de l'étrier 22 par rapport à l'étrier principal 14, la base 36 de l'étrier intermédiaire est disposée à distance de la base 40 de la pièce de connexion 26.

Ainsi, l'étrier 22 peut pivoter autour des pivots 44 tout en glissant sur les côtés latéraux 42 de la pièce de connexion qui, comme connue en soi, est en matière plastique, ce qui interdit le contact métal/métal entre les étriers principaux, tout en assurant un bon glissement des deux pièces.

Bien entendu, l'exemple décrit à la figure 2 peut s'appliquer également à la liaison à articulation prévue à l'extrémité de l'étrier intermédiaire 22 avec l'étrier terminal 24.

De plus, il peut être prévu, comme cela a été mentionné plus, qu'il n'existe qu'un seul étrier intermédiaire faisant office d'étrier terminal et, dans ce cas, il n'est pas nécessaire que cet étrier 22 ait une forme de "U" inversé, il suffit qu'il présente des ouvertures 46 pour loger les pivots 44.

On se réfère maintenant, en plus, aux figures 3 et 4 dans lesquelles il est montré un moyen d'immobilisation de la pièce de connexion dans l'étrier qui le porte.

Sur la figure 3, le dos 12 de l'étrier principal 10 comporte une saillie 48 non effaçable qui vient coopérer avec un évidement 50 prévu dans la base 40 de la pièce de connexion 26, cette saillie 48 s'érigeant radialement vers l'intérieur du "U" que présente l'étrier principal.

Plus particulièrement, comme visible aux figures 3 et 4, la saillie 48 est constituée d'une patte pliée rigide non élastique 52 de forme sensiblement rectangulaire dont les grands côtés sont sensiblement parallèles et à distance des flancs latéraux 14 de l'étrier principal 10, dont l'un des petits côtés, servant de bord d'ancrage 54, est situé à proximité du bord libre 56 de l'extrémité 18 de cet étrier et dont l'autre petit côté forme un bec de verrouillage 58 dont le rôle sera explicité dans la suite de la description.

La patte 52 résulte, d'une part, d'une découpe 59 en forme de "U" d'une partie du dos 12 puis d'un enfoncement de la matière se trouvant à l'intérieur de ce "U" vers l'intérieur du "U" de l'étrier 10, de telle sorte que la direction de la patte 52 forme un angle B avec un plan passant pas le dos 12 de l'étrier 10.

L'étrier 10 est en un matériau métallique, cette patte 52 est par conséquent rigide et ne subira aucun mouvement autour de son bord d'ancrage 54, ce qui la rend non effaçable lors d'une éventuelle rencontre avec un obstacle s'appuyant sur le bec 58.

L'évidement 50 porté par la base 40 de la pièce de connexion présente également une forme rectangulaire dont la distance entre les grands côtés est sensiblement égale à la distance entre les grands côtés de la patte 52 et dont la distance entre les petits côtés est telle que le petit côté de l'évidement opposé au bord libre 56 de l'étrier principal vient coopérer avec le bec de verrouillage 58 de la patte 52 en formant une surface d'appui de verrouillage 60.

Comme connu en soi, la pièce de connexion 26, appelée usuellement pièce anti-bruit, présente en plus une surface de butée 62 qui consiste en un épaississement de la paroi des flancs latéraux 42 de la pièce anti-bruit, de manière à créer un excroissance 64 s'étendant sur les trois côtés de la pièce de connexion.

En complément, et comme cela est également connu en soi, il est prévu un moyen d'arrêt complémentaire consistant en une coopération d'une partie pliée 66 radialement intérieure à partir de l'extrémité libre des flancs 14 de l'étrier principal avec une découpe 68 prévue sur les côtés latéraux 42 de la pièce de connexion.

En pratique, la distance entre la surface d'appui de verrouillage 60 et la surface de butée 62 de la pièce de connexion doit être légèrement supérieure à la distance prévue entre le bec de verouillage 58 et le bord libre 56 de l'étrier principal.

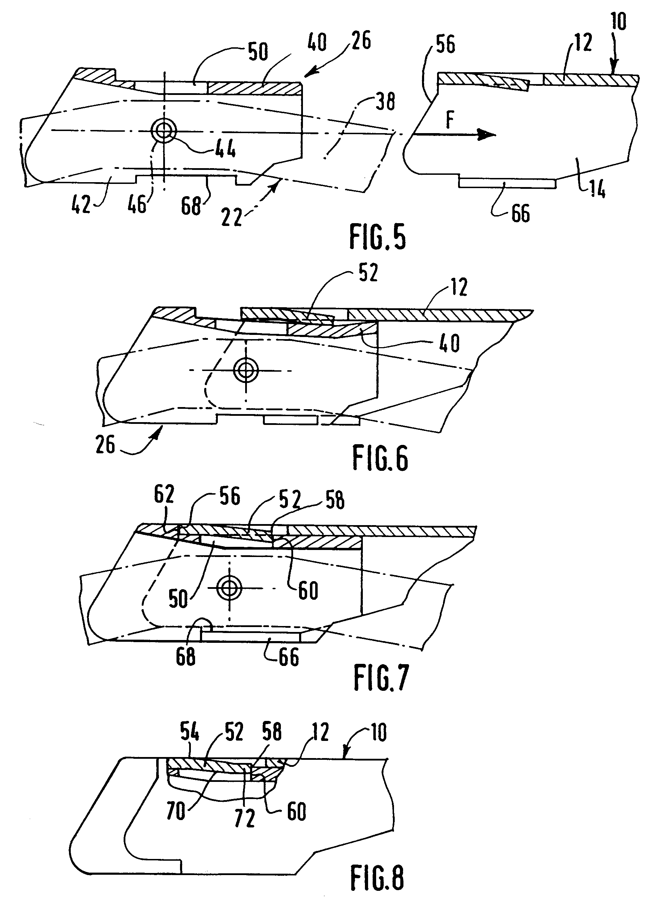

On se réfère maintenant aux figures 5 à 7 qui montrent le mode de montage permettant d'obtenir un balai selon l'invention.

Dans une première étape, comme représenté à la figure 5, la pièce de connexion 26 munie de l'évidement 50 est rapportée sur l'étrier intermédiaire 22 d'une façon telle que les côtés latéraux 42 de cette pièce viennent s'appuyer sur les faces extérieures des flancs latéraux 38 de l'étrier intermédiaire, qui est dessiné en traits mixtes interrompus de manière à faciliter la lecture du dessin, et que les pivots 44 que porte cette pièce de connexion viennent coopérer avec les ouvertures 46 que présentent les flancs latéraux de l'étrier intermédiaire 22.

L'étrier intermédiaire équipé de la pièce de connexion est ensuite présenté en vis-à-vis du bord libre 56 de l'étrier principal 10 pour être glissé entre le dos 12 de cet étrier principal et la partie pliée 66 que présente ce dernier, ce glissement étant effectué selon la flèche F représentée sur la figure 5.

Pendant ce mouvement, la base 40 de la pièce de connexion 26 et les côtés latéraux 42 viennent respectivement en contact avec les surfaces intérieurs du dos 12 de l'étrier principal et des flancs latéraux 14 de cet étrier.

En continuant le mouvement, et comme visible sur la figure 6, la base 40 de la pièce de connexion 26 va venir en contact avec la patte 52 prévue sur le dos 12 de l'étrier principal, la patte 52 étant une patte rigide va créer un effort tel que que la base 40 de la pièce de connexion 26 qui est, de manière connue en soi, en matière plastique, va fléchir sous l'action de cette patte, fléchissement qui, comme visible sur cette figure, va se concrétiser par un affaissement de la matière constitutive de la base 40 vers l'intérieur de l'évidement que présente la section en forme de "U" de cette pièce de connexion, la patte 52 étant non effaçable aucun mouvement de cette dernière résulte du contact avec la base 40.

En continuant le mouvement, toujours selon la flèche F définie à la figure 5, la patte 52 et plus particulièrement le bec de verrouillage 58 va glisser au-delà de la surface d'appui de verrouillage 60 que présente l'évidement 50 en pénétrant à l'intérieur de cet évidement, comme cela est visible sur la figure 7.

Dans cette situation, la pièce de connexion avec l'étrier intermédiaire 22 est immobilisée en translation de droite à gauche en considérant la figure 7 par appui du bec de verrouillage 58 sur la surface d'appui de verrouillage 60 de la pièce de connexion, et dans un mouvement de translation de gauche à droite, par appui du bord libre 56 de l'étrier principal avec la surface de butée 62 que présente la pièce de connexion.

Accessoirement, les parties pliées 66 coopèrent avec la découpe 68 prévue dans la pièce de connexion pour assurer un verrouillage supplémentaire.

On se réfère maintenant à la figure 8 qui montre une variante de réalisation de l'invention.

Dans cette figure, la patte de verrouillage 52 est constituée de deux parois consécutives, une première paroi inclinée 70 issue du bord d'ancrage 54 et faisant saillie à l'intérieur du "U" que présente l'étrier principal 10, cette première paroi se poursuivant par une deuxième paroi 72, sensiblement horizontale, de manière à ce qu'elle soit sensiblement parallèle au dos 12 de l'étrier principal, cette seconde paroi horizontale 72 portant le bec de verrouillage 58 coopérant avec la surface d'appui de verrouillage 60 de la pièce de connexion 26.

La présente invention n'est pas limitée à l'exemple de réalisation décrite, mais englobe toutes variantes.

Notamment, il peut être prévu que la saillie 48 soit constituée par un enfoncement de la paroi du dos 12 de l'étrier principal en comportant une surface plane venant coopérer avec la surface d'appui de verrouillage 60 de la pièce de connexion.

## Revendications

1. Balai d'essuie-glace, notamment pour véhicule automobile, comportant une monture porteuse (4) d'une lame d'essuie-glace (6), ladite monture étant constituée d'une multiplicité d'étriers (10,22,24) présentant une section en forme de "U" inversé avec un dos (12,36) et deux flancs latéraux (14,38) et articulés entre eux par l'intermédiaire de pièces de connexion (26) présentant une forme de "U" inversé avec une base (40) et des côtés latéraux (42) et comportant des moyens de verrouillage par rapport à l'un des étriers, caractérisé en ce que l'étrier (10,22) porte une saillie non effaçable (48) venant coopérer avec une surface d'appui de verrouillage (60) prévue sur la pièce de connexion (26).

2. Balai d'essuie-glace selon la revendication 1, caractérisé en ce que la saillie est une patte (52) issue d'un étrier (10,22).

3. Balai d'essuie-glace selon la revendication 1 ou 2, caractérisé en ce que la saillie (48) est une patte (52) issue du dos (12,36) d'un l'étrier (10,22).

4. Balai d'essuie-glace selon l'une des revendications précédentes, caractérisé en ce que la saillie (48) est une patte rigide (52).

5. Balai d'essuie-glace selon l'une des revendications précédentes, caractérisé en ce que la saillie (48) est une patte inclinée (52).

6. Balai d'essuie-glace selon l'une des revendications précédentes, caractérisé en ce que la saillie (48) porte un bec de verrouillage (58) coopérant avec une surface d'appui de verrouillage (60) prévue sur la pièce de connexion.

7. Balai d'essuie-glace selon l'une des revendications précédentes, caractérisé en ce que la surface d'appui de verrouillage (60) est formée par un évidement (50) prévu dans la pièce de connexion (26).

8. Balai d'essuie-glace selon la revendication 6, caractérisé en ce que l'évidement (50) est porté par la base (40) de la pièce de connexion.
